# EUROPEAN PATENT APPLICATION

(11) **EP 4 799 750 A2**
(43) Date of publication of application: **02.09.2026**
(21) Application number: 26192605.9
(22) Date of filing: 27.05.2024
(51) Int. Cl.: B23K 20/12

(54) **HEAT SINK ASSEMBLY**

(30) Priority: 30.05.2023 KR 20230069307; 24.05.2024 KR 20240067688
(62) Document number(s) of the earlier application(s) in accordance with Art. 76 EPC: 24815816.4 / 4 553 957
(71) Applicant: LG Energy Solution, Ltd., Seoul 07335 (KR)
(72) Inventor: HUR, Nam Hoon, 34122 DAEJEON (KR); SHIN, Ju Hwan, 34122 DAEJEON (KR); LEE, Hyoung Suk, 34122 DAEJEON (KR)
(74) Representative: Plasseraud IP

(57) **Abstract**

A heat sink assembly includes a heat sink having a plurality of ribs integrally molded along a length direction of the heat sink by extrusion molding, the heat sink having spaces between the plurality of ribs forming a flow path, and the heat sink having first and second surfaces that are open at ends of the length direction of the heat sink; and a pair of end plugs respectively closing the first and second surfaces at the opposite ends of the heat sink, wherein the plurality of rib includes a center rib having one end of the first surface being closed and another end of the second surface being open with respect to the pair of end plugs, and a side rib disposed on at least one side of the center rib in a width direction of the center rib, and the side rib being open at opposite ends of the first and second surface sides.

## Description

### [Cross Reference to Related Applications]

This application claims the benefit of priority to Korean Patent Application No. 10-2023-0069307, filed on May 30, 2023 and Korean Patent Application No. 10-2024-0067688, filed on May 24, 2024, the disclosures of all of which are incorporated herein by reference in their entirety.

### [Technical Field]

The present disclosure relates to a heat sink assembly mounted to a bottom surface of a battery pack having a plurality of secondary batteries to facilitate heat dissipation of the battery pack.

### [Background Art]

Secondary batteries, unlike primary batteries, are rechargeable and have been widely researched and developed in recent years due to the potential for miniaturization and large capacity. The demand for secondary batteries as an energy source is increasing rapidly due to the increasing technological development and demand for mobile devices, as well as electric vehicles and energy storage systems that are emerging in response to environmental protection needs.

Secondary batteries are categorized into coin type batteries, cylindrical batteries, prismatic batteries, and pouch type batteries according to the shape of the battery case. In a secondary battery, an electrode assembly mounted inside the battery case is a chargeable and dischargeable power generating device comprising a stacked structure of electrodes and separators.

Since secondary batteries are demanded to be used continuously for a long period of time, it is necessary to effectively control the heat generated during the charging and discharging process. If the secondary battery is not properly cooled, the increase in temperature will cause an increase in current, which will again cause an increase in temperature, which will cause a chain reaction, eventually leading to the catastrophic condition of thermal runaway.

In order to effectively dissipate the heat generated by secondary batteries, heat sinks (also called cooling plates) through which coolant flows are widely used. The heat sink is mounted on the bottom surface of a group of secondary batteries, such as a battery pack mounting a plurality of secondary batteries and performs a cooling function by absorbing heat generated inside the pack with a coolant and releasing it to the outside.

Heat sinks can be divided into brazing heat sinks and extruded heat sinks according to their structure or manufacturing method. A brazing heat sink is a structure in which two plates are brazed together to form a flow path, which has a high degree of freedom in flow path design but has a disadvantage in structural rigidity due to material degradation. On the other hand, extruded heat sinks, which are manufactured as a continuum through extrusion molding, have an advantage in structural rigidity, but have the disadvantage that only straight flow paths can be realized, resulting in a large number of ports, and thus, pipes for connection take up space.

### [Summary]

### [Technical Problem]

The present disclosure is directed to providing a heat sink assembly that is an extruded heat sink and does not require a separate pipe for flow path formation, thereby occupying less space, and can improve differential pressure by reducing the number of components with a simplified flow path configuration.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a heat sink assembly, where in one example, the heat sink assembly includes: a heat sink having a plurality of ribs integrally molded along a length direction of the heat sink by extrusion molding, the heat sink having spaces between the plurality of ribs forming a flow path, and the heat sink having first and second surfaces that are open at opposite ends of the length direction of the heat sink; and a pair of end plugs respectively closing the first and second surfaces at the opposite ends of the heat sink, wherein the plurality of rib includes: a center rib having one end of the first surface being closed and another end of the second surface being open with respect to the pair of end plugs, and a side rib disposed on at least one side of the center rib in a width direction of the center rib, and the side rib being open at opposite ends of the first and second surface sides.

In an exemplary embodiment of the present disclosure, an inlet port may be disposed at one side and an outlet port may be disposed at another side along the width direction of the center rib on the first surface side which is closed with respect to one end plug of the pair of end plugs.

In addition, the side rib is provided in a plurality, and among the plurality of side ribs, the plurality of side ribs that are located closer to the center rib have first ends that are located farther from the first surface side and have send ends that are located closer to the second surface side than those of the plurality of side ribs that are located farther from the center rib.

The plurality of side ribs may be respectively provided on opposite sides of the center rib in the width direction.

Meanwhile, in an exemplary embodiment of the present disclosure, the pair of end plugs may be coupled to the first and second surfaces of the heat sink by welds, respectively.

In one example, the pair of end plugs may be welded to an upper plate and a lower plate of the heat sink by a friction-stir welding performed at the first surface side and the second surface side, respectively, and weld depths of friction-stir welds on the upper plate and lower plate may overlap each other.

Alternatively, the pair of end plugs are welded to an upper plate or a lower plate of the heat sink by a friction-stir welding performed at the first surface side and the second surface side, respectively, and a weld depth of a friction-stir weld may start from the upper plate or the lower plate and may penetrate through the respective pair of end plugs to at least a portion of the lower plate or the upper plate.

In addition, the upper plate and the lower plate may have different thicknesses.

In addition, the weld depth of the friction-stir weld to the first and second surfaces of the heat sink may start at one of the upper plate and the lower plate having a lesser thickness for the flow path and may penetrate through the respective pair of end plug to at least a portion of the other of the upper plate and the lower plate having a greater thickness for the flow path.

In another example, the pair of end plugs may be welded to an upper plate and a lower plate of the heat sink by a friction-stir welding performed at the first surface side and the second surface side, respectively, and a separate auxiliary welding part may be formed on the pair of end plugs and on side surfaces of the first and second surfaces.

The auxiliary welding part is formed in a region where weld depths of a friction-stir weld on the upper plate and the lower plate do not overlap each other.

In addition, the weld depths of the friction-stir weld on the upper plate and the lower plate are connected by the auxiliary welding part.

Depending on the embodiment, the auxiliary welding part may be formed on a processing surface exposing weld depths of friction-stir welds on the upper plate and the lower plate, and interconnects of the weld depths of the friction-stir welds on the upper plate and the lower plate that do not overlap each other.

In yet another example, the pair of end plugs may be welded by a friction-stir welding performed along a front portion width direction of the pair of end plugs with respect to the first and second surfaces of the heat sink.

In this case, the weld depths of friction-stir welds span the upper plate, lower plate, and side surfaces with respect to the first and second surfaces of the heat sink.

### [Advantageous Effects]

The heat sink assembly of the present disclosure, having the configuration as described above, has excellent structural rigidity because the heat sink is manufactured as a continuum by extrusion molding, meanwhile, by performing a machining processing on both length direction ends of the ribs integrally formed in the heat sink to form a center rib and a side rib, a cooling passage divided into an inlet and an outlet may be configured by coupling a pair of end plugs to both ends.

Accordingly, the heat sink assembly of the present disclosure, while having an extruded heat sink as a basic framework which is advantageous in structural rigidity, occupies less space by not requiring a separate pipe for forming the flow path, and can improve the differential pressure by reducing the number of components with a simplified flow path configuration.

However, the technical effects that can be obtained through the present disclosure is not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a drawing illustrating a heat sink assembly according to one embodiment of the present disclosure.
FIG. 2 is an exploded perspective view of a heat sink assembly.
FIG. 3 is a drawing illustrating the structure of the ribs integrally formed in the heat sink.
FIG. 4 is a drawing illustrating the flow of coolant within the heat sink assembly.
FIG. 5 is a drawing illustrating one embodiment of the welded structure of a heat sink and an end plug.
FIGS. 6 and 7 are drawings illustrating one embodiment of a unidirectional welded structure of a heat sink and an end plug.
FIG. 8 is a drawing illustrating another embodiment of a welded structure of a heat sink and an end plug.
FIG. 9 is a drawing illustrating yet another embodiment of a welded structure of a heat sink and an end plug.
FIG. 10 is a drawing illustrating an example of a heat sink assembly according to the present disclosure applied to a pack case.

### [Detailed Description]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a heat sink assembly, where in one example, the heat sink assembly includes: a heat sink having a plurality of ribs integrally molded along an length direction by extrusion molding, the spaces between the ribs forming a flow path, and having open first and second surfaces at both ends of the length direction; and a pair of end plugs each closing the first and second surfaces at both ends of the heat sink, wherein the plurality of rib includes: a center rib having one end of the first surface closed and the other end of the second surface open with respect to the pair of end plugs, and a side rib disposed on at least one side of the center rib in a width direction, and open at both ends of the first and second surface sides.

The heat sink assembly of the present disclosure having the above configuration, wherein the heat sinks are manufactured as a continuum by extrusion molding to possess excellent structural rigidity, meanwhile, machining processing is performed on both length direction ends of the ribs integrally formed in the heat sink to form a center rib and a side rib, so that a cooling passage divided into an inlet and an outlet may be configured by coupling a pair of end plugs to both ends.

Accordingly, the heat sink assembly of the present disclosure, while having an extruded heat sink as a basic framework which is advantageous in structural rigidity, occupies less space by not requiring a separate pipe for forming the flow path, can improve differential pressure by reducing the number of components with a simplified flow path configuration.

### [Mode for Practicing the Invention]

Hereinafter, specific embodiments of a heat sink assembly 10 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [First Embodiment]

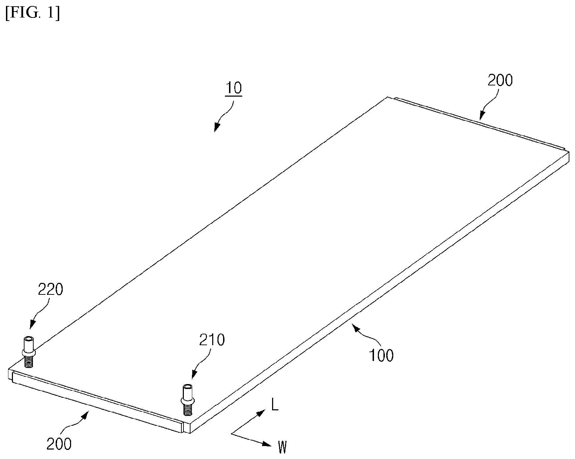

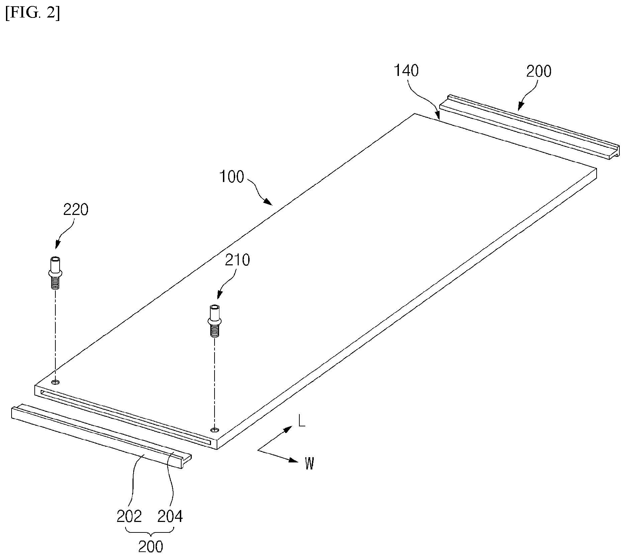

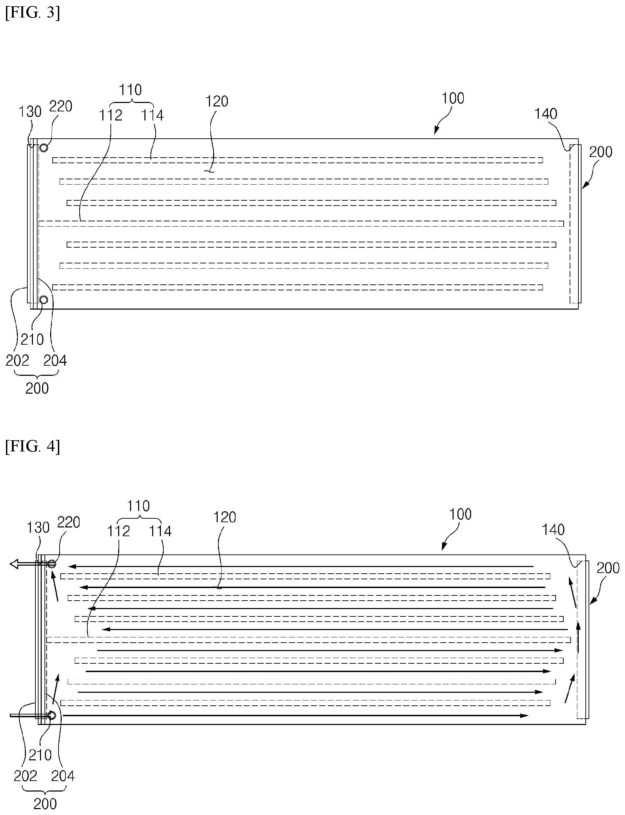

FIG. 1 is a drawing illustrating a heat sink assembly according to one embodiment of the present disclosure, FIG. 2 is an exploded perspective view of a heat sink assembly, FIG. 3 is a drawing illustrating the structure of the ribs integrally formed in the heat sink. Referring to the accompanying FIGS. 1 through 3, the heat sink assembly 10 of the present disclosure will be described in detail.

The heat sink assembly 10 of the present disclosure includes a heat sink 100, which is manufactured by extrusion molding, and a pair of end plugs 200.

The heat sink 100, manufactured as a continuum via extrusion molding, is of a configuration corresponding to a main body, having a plurality of ribs 110 integrally molded along a length direction L. The heat sink 100 may be prepared by cutting an extrusion molding part manufactured as a continuum to a designed length.

The plurality of ribs 110 are spaced apart with a suitable spacing, with each space between the ribs 110 functioning as a flow path 120 (coolant passage) through which the coolant flows. And, if the surfaces forming the both length direction L ends of the heat sink 100 are referred to as the first surface 130 and the second surface 140, respectively, the first surface 130 and the second surface 140 are open. That is, through the first surface 130 and the second surface 140, the ribs 110 formed inside the heat sink 100 can be observed and accessed.

Here, the length direction L refers to the extrusion molding direction of the heat sink 100, i.e., the direction in which the ribs 110 extend, and the width direction W refers to a direction orthogonal to the length direction L in which the plurality of ribs 110 are spaced apart.

A pair of end plugs 200 are coupled to close the first and second surfaces 130, 140 at both ends in the length direction L of the heat sink 100, respectively. The end plugs 200 include an insert 204 that is inserted into the heat sink 100 and a front portion 202 that covers the first and second surfaces 130 and 140 of the heat sink 100 after coupling. That is, the end plugs 200 are substantially shaped like the letter "T" of the English alphabet when viewed from the width direction W. The front portion 202 of the end plug 200 is shaped to correspond to the outline of the first and second surfaces 130, 140 of the heat sink 100, and the insert 204 is shaped to fit snugly into the internal space of the heat sink 100. As will be described later, to provide space for the insert 204 of the end plug 200 to be inserted, a plurality of ribs 110 are machining processed to cut away portions of their ends.

As shown in FIG. 3, the plurality of ribs 110 forming the flow path 120 inside the heat sink 100 can be divided into center ribs 112 and side ribs 114, depending on their relative position (contact or not) with the end plug 200.

The center rib 112 corresponds to a rib 110 that is closed at one end on the first surface 130 and open at the other end on the second surface 140 with respect to the pair of end plugs 200. In other words, the center rib 112 divides the space inside the heat sink 100 into two spaces that are isolated on the first surface 130 but connected on the second surface 140. In FIG. 3, the center rib 112 is centered, but the center rib 112 does not necessarily divide the space inside the heat sink 100 evenly. The center rib 112 should be understood in the sense of the rib 110, which is the structural reference for the entire flow path 120, dividing the internal space of the heat sink 100 so that the divided two spaces only communicate at the second surface 140 side.

Side ribs 114 refer to remaining ribs 110 disposed on at least one side of center rib 112 in the width direction W. The side ribs 114, unlike the center ribs 112, are open with respect to the pair of end plugs 200 at both the first and second surfaces 130, 140 sides. Thus, the side ribs 114 disposed on any one side of the width direction W of the center rib 112 are interconnected at both ends of the first and second surfaces 130, 140.

Note that while FIG. 3 shows a plurality of side ribs 114 on both sides of the width direction W of the center rib 112, this is an example, and the side ribs 114 can be arranged in various ways. For example, although not illustrated, one or a plurality of side ribs 114 may be disposed on only one side of center rib 112, or a plurality of side ribs 114 may be disposed on one side while only one side rib 114 is disposed on the other side. Further, the spacing between the side ribs 114 is not necessarily constant.

The structure of such center rib 112 and side ribs 114, in particular the distance spaced apart from the first and second surfaces 130, 140 and the full length of each rib 110, is made to a designed dimension by machining processing (such as cutting) performed through the first and second surfaces 130, 140, based on the depth at which the insert 204 of the end plug 200 is inserted. For example, the distance that the center rib 112 is spaced apart from the first surface 130 may be cut to correspond to the length of the insert 204 of the end plug 200, such that one end of the center rib 112 may be closed on the first surface 130 side.

In such an embodiment of the present disclosure, an inlet port 210 is disposed at one side and an outlet port 220 is disposed at the other side along the width direction W of the center rib 112 on the first surface 130 which is closed with respect to the end plug 200. As described above, the center rib 112 divides the space inside the heat sink 100 into two spaces that are isolated at the first surface 130 side but connected to the second surface 140. Thus, by dividing the inlet port 210 and outlet port 220 proximate to the first surface 130 on both sides of the width direction W of the center rib 112, coolant flow in and out of the heat sink 100 in the shape of the English alphabet "U". In FIG. 4, the flow of coolant within the heat sink assembly 10 is illustrated by arrows.

And, in the case of a plurality of side ribs 114 are provided, the relative position along the length direction L can be varied while keeping the full length of each side rib 114 the same or similar to facilitate coolant flow from the inlet port 210 to outlet port 220. Referring to FIG. 4, the plurality of side ribs 114 can be made such that, in the width direction W, one end of each side rib 114 on the first surface 130 side progressively gets further away from the first surface 130 as it approaches the center rib 112, while the other end of each side rib 114 on the second surface 140 side progressively gets closer to the second surface 140 as it approaches the center rib 112. By this relative arrangement of the side ribs 114, the differential pressure of the coolant entering from the inlet port 210 and exiting from the outlet port 220 is reduced and the flow distribution in each flow path 120 is improved to be more uniform.

### [Second Embodiment]

In the first embodiment, a structure of a heat sink assembly 10 has been described that utilizes an extruded heat sink 100 but does not require a separate pipe for forming the flow path 120. The heat sink assembly 10 of the present disclosure is made by sealing and coupling a pair of end plugs 200 against the open first and second surfaces 130, 140 of the heat sink 100, respectively. In a second embodiment, various structures for effectively sealing and coupling the end plugs 200 to the heat sink 100 are described.

The pair of end plugs 200 sealing the open first surface 130 and second surface 140 of the heat sink 100, respectively, can be coupled in a variety of ways, including fitting and sealing members, welding, and the like, although coupling by welding may be preferable given the thermal expansion and contraction associated with heat dissipation, reliability of the seal, durability, productivity, and the like.

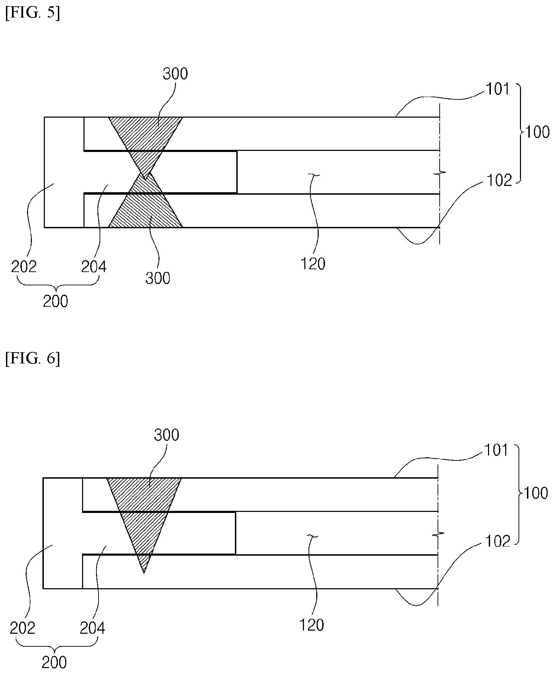

FIG. 5 is a drawing illustrating one embodiment of a welded structure of a heat sink 100 and an end plug 200. In the example shown, a pair of end plugs 200 are bonded to the upper plate 101 and lower plate 102 of the heat sink 100 by friction-stir welding at the first surface 130 side and the second surface 140 side, respectively. The friction-stir weld spans the full width of the heat sink 100, particularly the weld depths 300 of the friction-stir welds on the upper plate 101 and lower plate 102 overlap each other. Because the weld depths 300 at the upper and lower plates 101, 102 overlap, the front portion 202 of the end plug 200 is sealed against the upper plate 101 and lower plate 102 of the heat sink 100, respectively, and the sealing on both sides of the width direction W of the heat sink 100 is completed together. That is, the insert 204 side of the end plug 200 and both sides of the width direction W of the heat sink 100 are bonded to each other by the weld depths 300 overlapping from top to bottom. Thus, in the embodiment of FIG. 5, a sealing structure by welding around all side surfaces of the first surface 130 or the second surface 140 is completed by two friction-stir welding operations performed sequentially on the upper plate 101 and the lower plate 102 of the heat sink 100.

FIG. 6 is a drawing illustrating a modified embodiment of the welded structure of the heat sink 100 and the end plug 200. Whereas the embodiment of FIG. 5 may be referred to as a bidirectional welding structure, such as where the end plug 200 is bonded to the upper plate 101 and the lower plate 102 of the heat sink 100 by friction-stir welding, respectively, the embodiment of FIG. 6 shows a unidirectional welding structure where the end plug 200 is bonded to the upper plate 101 or the lower plate 102 of the heat sink 100 by a single friction-stir welding.

The unidirectional welding structure of FIG. 6 is an embodiment that can be applied when a sufficiently deep weld depth 300 can be formed by friction-stir welding. Here, a sufficiently deep weld depth 300 means a weld depth 300 such that a friction-stir weld initiated from the upper plate 101 or lower plate 102 of the heat sink 100 can penetrate through the insert 204 of the interposed end plug 200 to at least a portion of the lower plate 102 or upper plate 101. FIG. 6 is an exemplary illustration of a friction-stir weld performed on the upper plate 101 of the heat sink 100, and the meaning of a sufficiently deep weld depth 300 will be self-explanatory upon reference to FIG. 6.

An advantage of the unidirectional welding structure shown in FIG. 6 is that the bonding of the end plug 200 and the sealing of the heat sink 100 is accomplished with a single friction-stir weld performed on either the upper plate 101 or the lower plate 102 of the heat sink 100. In the embodiment of FIG. 6, the sealing of the heat sink 100 on the upper and lower plates and both sides of the end plug 200 is accomplished as described in the embodiment of FIG. 5. As such, if the welding equipment for friction-stir welding has the capability to form a sufficiently deep weld depth 300, the productivity of the heat sink assembly 10 can be improved by applying the unidirectional welding structure of FIG. 6.

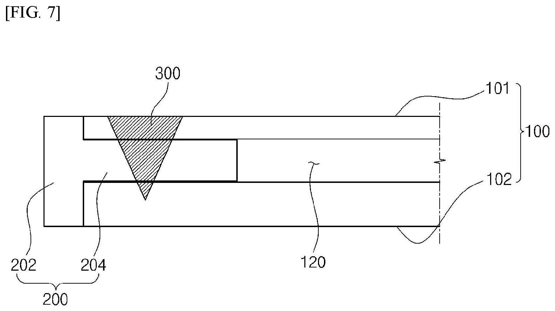

FIG. 7 is an alternative application of the unidirectional welding structure of FIG. 6, which allows the unidirectional welding structure to be applied even when the performance of the welding equipment for friction-stir welding is somewhat insufficient. Referring to FIG. 7, the thicknesses of the upper plate 101 and the lower plate 102 of the heat sink 100 are configured to be different, and by performing a friction-stir weld on one side of the heat sink 100 with a thinner thickness, the weld depth 300 is configured to penetrate through the insert 204 of the end plug 200 and into at least a portion of the other side. Referring to FIG. 7, the thickness of the upper plate 101 of the heat sink 100 is thinner than the thickness of the lower plate 102, and the friction-stir welding is performed on the upper plate 101 of the heat sink 100. Here, the shape of the end plug 200 and the size of the front portion 202 and the position of the insert 204 may be changed in response to the asymmetrical structure of the thickness of the upper and lower plates of the heat sink 100.

The embodiment of FIG. 7 has the effect of expanding the applicable range of the unidirectional welding structure beyond the equipment limitations of friction-stir welding. That is, by designing the structure of the heat sink 100 as an asymmetrical structure in terms of thickness, a sufficiently deep weld depth 300 can be obtained to realize the unidirectional welding structure. For reference, the structural rigidity of one side of the heat sink 100 (the upper plate in the drawings), which is thin in thickness, should be fully considered in the design, and if necessary, auxiliary structures (e.g., ribbed structures, etc.) can be added to improve the rigidity.

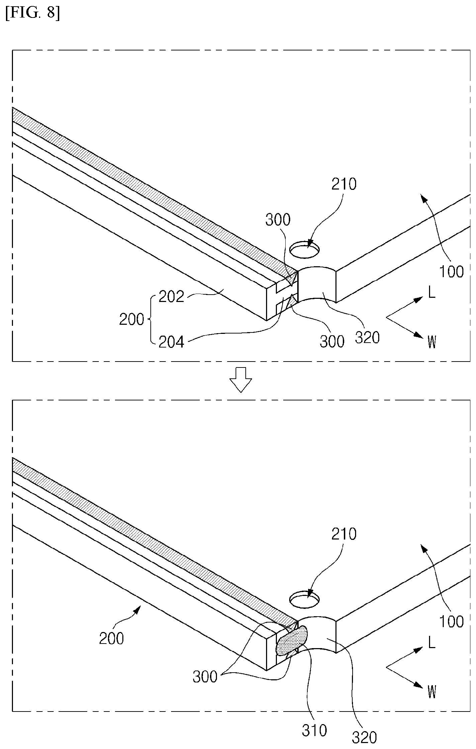

FIG. 8 is a drawing illustrating an alternative embodiment of the welding structure of the heat sink 100 and the end plugs 200. The embodiment of FIG. 8 is identical to the embodiment of FIG. 5 in that the pair of end plugs 200 are bonded to the upper plate 101 and lower plate 102 of the heat sink 100 by friction-stir welding at the first surface 130 side and the second surface 140 side, respectively, and further differs in that a separate auxiliary welding part 310 is formed on the side surfaces of the pair of end plugs 200 and the first and second surfaces 130, 140.

The embodiment of FIG. 8 is intended to strengthen or complement the sealing structure of the both ends in the width direction W of the heat sink 100. The embodiment of FIG. 5 requires that the weld depth 300 of the friction-stir welding on the upper plate 101 and the lower plate 102 overlap each other, but the welding structure of FIG. 8 may be applied to respond to possible deviations in the welding quality due to equipment limitations of the friction-stir welding, deterioration of the welding tool over time, etc., or when it is difficult to secure a sufficient weld depth 300 by friction-stir welding due to the characteristics of the base material.

Thus, basically, the auxiliary weld portion 310 is formed in an area where the weld depth 300 of the friction stir welding on the upper plate 101 and the lower plate 102 do not overlap each other. Accordingly, the weld depths 300 of the friction stir welding on the upper plate 101 and the lower plate 102 are completely connected by the auxiliary welding part 310, and the sealing structure on both sides of the width direction W of the heat sink 100 is densely completed.

In accordance with the embodiment of FIG. 8, the auxiliary welding part 310 may be formed on a processing surface 320 that exposes the weld depth 300 of the friction-stir welds on the upper plate 101 and the lower surface 102, and interconnects the weld depth 300 of the friction-stir welds on the upper plate 101 and the lower surface 102 that do not overlap each other. The processing surface 320 is made to a weld depth that exposes the insert 204 of the end plug 200, and the processing surface 320 may be formed as a curved or flat surface, for example, by milling.

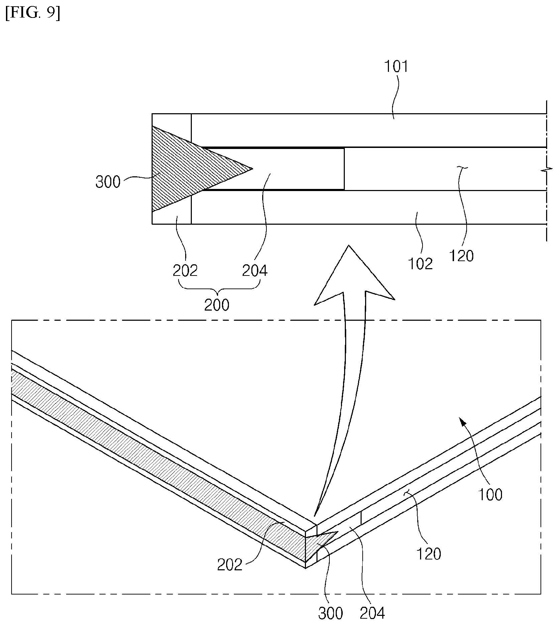

FIG. 9 is a drawing illustrating yet another embodiment of the welding structure of the heat sink 100 and the end plug 200. The embodiment of FIG. 9 differs in the direction of the weld to the end plug 200 when compared to the embodiments of FIGS. 5 and 8. In the embodiment of FIG. 9, the first and second surfaces 130, 140 of the heat sink 100 are bonded along the width direction W of the front portion 202 of the end plug 200 by friction-stir welding. That is, the friction-stir welding is performed through the front portion 202 of the end plug 200 rather than through the upper and lower plates 101, 102 of the heat sink 100, as shown in FIG. 9.

In this embodiment of FIG. 9, the weld depth 300 of the friction-stir weld, as shown in the cross-sectional view, spans the upper plate 101 and lower plate 102, and the side surfaces, for the first and second surfaces 130, 140 of the heat sink 100. By having the weld depth 300 span both the upper plate 101 and lower plate 102 and the side surfaces of the heat sink 100, the entire bonding surface with the end plug 200 is sealed. The embodiment of FIG. 9 is advantageous in that the sealing of the first surface 130 or second surface 140 of the heat sink 100 is accomplished with a single friction-stir weld to the front portion 202 of the end plug 200.

### [Third Embodiment]

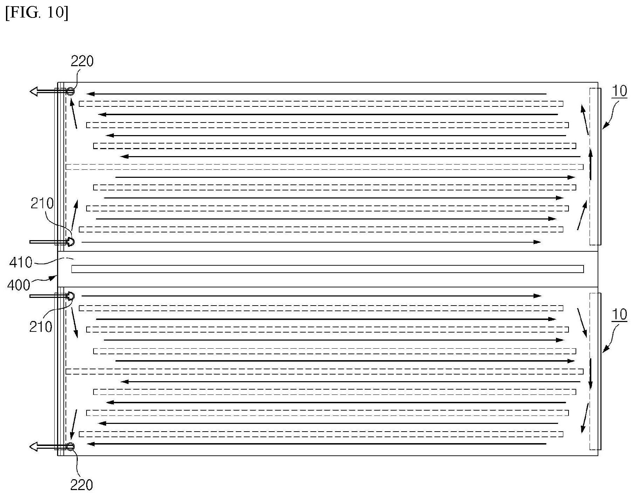

FIG. 10 illustrates one example of the heat sink assembly 10 of the present disclosure described in detail above applied to a pack case 400.

In the exemplary embodiment of FIG. 10, the heat sink assembly 10 is coupled to the outside (bottom surface) of the bottom plate 410 of the pack case 400. The illustrated pack case 400 is configured with a plurality of battery modules mounted in two rows along the length direction L, with corresponding heat sink assemblies 10 disposed in each row, one in each row. However, this is only an example, and it would be possible to have a single heat sink assembly 10 coupled to the entire bottom surface of the pack case 400.

The two heat sink assemblies 10 are mirror-symmetrical in the arrangement of the ports 210, 220 and the structure of the flow paths 120 relative to the center of the length direction of the pack case 400. In the embodiment shown, a pair of inlet ports 210 are located in the center of the width direction W of the pack case 400, with a pair of outlet ports located further outwardly. By the coolant absorbing heat from the center of the width direction W, cooling from the inner battery cells, which are at a disadvantage in terms of heat dissipation, is effectively achieved.

As aforementioned, the present disclosure has been described in more detail through the drawings and embodiments. However, since the configuration described in the drawings or embodiments described herein is merely one embodiment of the present disclosure and do not represent the overall technical spirit of the disclosure, it should be understood that the disclosure covers various equivalents, modifications, and substitutions at the time of filing of this application.

### [Description of Reference Numerals]

10: HEAT SINK ASSEMBLY
100: HEAT SINK
101: UPPER PLATE
102: LOWER PLATE
110: RIB
112: CENTER RIB
114: SIDE RIB
120: FLOW PATH
130: FIRST SURFACE
140: SECOND SURFACE
200: END PLUG
202: FRONT PORTION
204: INSERT
210: INLET PORT
220: OUTLET PORT
300: WELD DEPTH
310: AUXILIARY WELDING PART
320: PROCESSING SURFACE
400: PACK CASE
410: BOTTOM PLATE
L: LENGTH DIRECTION
W: WIDTH DIRECTION

Examples of the present invention are defined in the following items.

### [Items]

### [Item 1]

A heat sink assembly comprising:
a heat sink having a plurality of ribs integrally molded along a length direction of the heat sink by extrusion molding, the heat sink having spaces between the plurality of ribs forming a flow path, and the heat sink having first and second surfaces that are open at opposite ends of the length direction of the heat sink; and
a pair of end plugs respectively closing the first and second surfaces at the opposite ends of the heat sink,
wherein the plurality of rib comprise:
   a center rib having one end at a first surface side being closed and another end at a second surface side being open with respect to the pair of end plugs, and
   a side rib disposed on at least one side of the center rib in a width direction of the center rib, and the side rib being open at opposite ends of the first and second surface sides.

### [Item 2]

The heat sink assembly of item 1, further comprising an inlet port disposed at one side and an outlet port disposed at another side along the width direction of the center rib on the first surface side which is closed with respect to one end plug of the pair of end plugs.

### [Item 3]

The heat sink assembly of item 2, wherein the side rib is provided in a plurality, and
wherein, among the plurality of side ribs, the plurality of side ribs that are located closer to the center rib have first ends that are located farther from the first surface side and have second ends that are located closer to the second surface side than those of the plurality of side ribs that are located farther from the center rib.

### [Item 4]

The heat sink assembly of item 3, wherein the plurality of side ribs are respectively provided on opposites sides of the center rib in the width direction.

### [Item 5]

The heat sink assembly of item 1, wherein the pair of end plugs are coupled to the first and second surfaces of the heat sink by welds, respectively.

### [Item 6]

The heat sink assembly of item 5, wherein the pair of end plugs are welded to an upper plate and a lower plate of the heat sink by a friction-stir welding performed at the first surface side and the second surface side, respectively, and
wherein weld depths of friction-stir welds on the upper plate and lower plate overlap each other.

### [Item 7]

The heat sink assembly of item 1, wherein the pair of end plugs are welded to an upper plate or a lower plate of the heat sink by a friction-stir welding performed at the first surface side and the second surface side, respectively, and
wherein a weld depth of a friction-stir weld starts from the upper plate or the lower plate and penetrates through the respective pair of end plugs to at least a portion of the lower plate or the upper plate.

### [Item 8]

The heat sink assembly of item 7, wherein the upper plate and the lower plate have different thicknesses.

### [Item 9]

The heat sink assembly of item 8, wherein the weld depth of the friction-stir weld to the first and second surfaces of the heat sink starts at one of the upper plate and the lower plate having a lesser thickness for the flow path, penetrates through the respective pair of end plugs to at least a portion of the other of the upper plate and the lower plate having a greater thickness for the flow path.

### [Item 10]

The heat sink assembly of item 5, wherein the pair of end plugs are welded to an upper plate and a lower plate of the heat sink by a friction-stir welding performed at the first surface side and the second surface side, respectively, and
wherein a separate auxiliary welding part is formed on the pair of end plugs and on side surfaces of the first and second surfaces.

### [Item 11]

The heat sink assembly of item 10, wherein the auxiliary welding part is formed in a region where weld depths of a friction-stir weld on the upper plate and the lower plate do not overlap each other.

### [Item 12]

The heat sink assembly of item 11, wherein the weld depths of the friction-stir weld on the upper plate and the lower plates are connected by the auxiliary welding part.

### [Item 13]

The heat sink assembly of item 10, wherein the auxiliary welding part is formed on a processing surface exposing weld depths of friction-stir welds on the upper plate and the lower plate, and
wherein interconnects of the weld depths of the friction-stir welds on the upper plate and the lower plate that do not overlap each other.

### [Item 14]

The heat sink assembly of item 5, wherein the pair of end plugs are welded by a friction-stir welding performed along a front portion width direction of the pair of end plugs with respect to the first and second surfaces of the heat sink.

### [Item 15]

The heat sink assembly of item 14, wherein weld depths of friction-stir welds span the upper plate, lower plate, and side surfaces with respect to the first and second surfaces of the heat sink.

## Claims

1. A heat sink assembly (10) comprising:
a heat sink (100) having a plurality of ribs (110) integrally molded along a length direction of the heat sink (100) by extrusion molding, the heat sink (100) having spaces between the plurality of ribs forming a flow path (120), and the heat sink (100) having first and second surfaces (130, 140) that are open at opposite ends of the length direction of the heat sink (100); and
a pair of end plugs (200) respectively closing the first and second surfaces (130, 140) at the opposite ends of the heat sink (100),
wherein the plurality of ribs (110) comprise:
a center rib (112) having one end at a first surface (130) side being closed and another end at a second surface (140) side being open with respect to the pair of end plugs (200), and
a side rib (114) disposed on at least one side of the center rib (112) in a width direction of the center rib (112), and the side rib (114) being open at opposite ends of the first and second surface sides,
wherein the pair of end plugs (200) are welded to an upper plate (101) and a lower plate (102) of the heat sink (100) by a friction-stir welding performed at the first surface side (130) and the second surface side (140), respectively, and
wherein a separate auxiliary welding part (310) is formed on the pair of end plugs (200) and on side surfaces of the first and second surfaces (130, 140).

2. The heat sink assembly (10) of claim 1, wherein the auxiliary welding part (310) is formed in a region where weld depths (300) of a friction-stir weld on the upper plate (101) and the lower plate (102) do not overlap each other.

3. The heat sink assembly (10) of claim 2, wherein the weld depths (300) of the friction-stir weld on the upper plate (101) and the lower plates (102) are connected by the auxiliary welding part (310).

4. The heat sink assembly (10) of claim 1, wherein the auxiliary welding part (310) is formed on a processing surface (320) exposing weld depths (300) of friction-stir welds on the upper plate (101) and the lower plate (102), and
wherein interconnects of the weld depths (300) of the friction-stir welds on the upper plate (101) and the lower plate (102) that do not overlap each other.

5. The heat sink assembly (10) of claim 1, further comprising an inlet port (210) disposed at one side and an outlet port (220) disposed at another side along the width direction of the center rib (112) on the first surface side (130) which is closed with respect to one end plug (200) of the pair of end plugs (200).

6. The heat sink assembly (10) of claim 5, wherein the side rib (114) is provided in a plurality, and
wherein, among the plurality of side ribs (114), the plurality of side ribs (114) that are located closer to the center rib (112) have first ends that are located farther from the first surface side (130) and have second ends that are located closer to the second surface side (140) than those of the plurality of side ribs (114) that are located farther from the center rib (112).

7. The heat sink assembly (10) of claim 6, wherein the plurality of side ribs (114) are respectively provided on opposites sides of the center rib (112) in the width direction.

8. The heat sink assembly (10) of claim 1, wherein the pair of end plugs (200) are welded to an upper plate (101) and a lower plate (102) of the heat sink (100) by a friction-stir welding performed at the first surface side (130) and the second surface side (140), respectively, and
wherein weld depths (300) of friction-stir welds on the upper plate (101) and lower plate overlap each other.

9. The heat sink assembly (10) of claim 1, wherein the upper plate (101) and the lower plate (102) have different thicknesses.

10. The heat sink assembly (10) of claim 9, wherein the weld depth (300) of the friction-stir weld to the first and second surfaces (130, 140) of the heat sink (100) starts at one of the upper plate (101) and the lower plate (102) having a lesser thickness for the flow path, penetrates through the respective pair of end plugs (200) to at least a portion of the other of the upper plate (101) and the lower plate (102) having a greater thickness for the flow path.

11. A heat sink assembly (10) comprising:
a heat sink (100) having a plurality of ribs (110) integrally molded along a length direction of the heat sink (100) by extrusion molding, the heat sink (100) having spaces between the plurality of ribs forming a flow path (120), and the heat sink (100) having first and second surfaces (130, 140) that are open at opposite ends of the length direction of the heat sink (100); and
a pair of end plugs (200) respectively closing the first and second surfaces (130, 140) at the opposite ends of the heat sink (100),
wherein the plurality of ribs (110) comprise:
a center rib (112) having one end at a first surface (130) side being closed and another end at a second surface (140) side being open with respect to the pair of end plugs (200), and
a side rib (114) disposed on at least one side of the center rib (112) in a width direction of the center rib (112), and the side rib (114) being open at opposite ends of the first and second surface sides
wherein the pair of end plugs (200) are welded by a friction-stir welding performed along a front portion width direction of the pair of end plugs (200) with respect to the first and second surfaces (130, 140) of the heat sink (100).
wherein weld depths (300) of friction-stir welds span the upper plate (101), lower plate (102), and side surfaces with respect to the first and second surfaces (130, 140) of the heat sink (100).

12. The heat sink assembly (10) of claim11, further comprising an inlet port (210) disposed at one side and an outlet port (220) disposed at another side along the width direction of the center rib (112) on the first surface side (130) which is closed with respect to one end plug (200) of the pair of end plugs (200).

13. The heat sink assembly (10) of claim 11, wherein the side rib (114) is provided in a plurality, and
wherein, among the plurality of side ribs (114), the plurality of side ribs (114) that are located closer to the center rib (112) have first ends that are located farther from the first surface side (130) and have second ends that are located closer to the second surface side (140) than those of the plurality of side ribs (114) that are located farther from the center rib (112).

14. The heat sink assembly (10) of claim 13, wherein the plurality of side ribs (114) are respectively provided on opposites sides of the center rib (112) in the width direction.

15. The heat sink assembly (10) of claim 11, wherein the upper plate (101) and the lower plate (102) have different thicknesses.
